(19) Europäisches Patentamt
European Patent Office
Office européen des brevets

(11) Publication number: **0 627 463 A2**

# (12) EUROPEAN PATENT APPLICATION

(21) Application number: **94108481.6**

(22) Date of filing: **01.06.94**

(51) Int. Cl.$^5$: **C08K 11/00**, C08K 13/02, //(C08K13/02,3:22,5:03)

(30) Priority: **04.06.93 JP 158103/93**

(43) Date of publication of application: **07.12.94 Bulletin 94/49**

(84) Designated Contracting States: **DE FR GB NL**

(71) Applicant: **SUMITOMO ELECTRIC INDUSTRIES, LTD.**
**5-33, Kitahama 4-chome,**
**Chuo-ku**
**Osaka-shi, Osaka 541 (JP)**

(72) Inventor: **Shukushima, Satoshi, c/o Osaka Works**
**Sumitomo Elec. Ind. Ltd.,**
**1-3, Shimaya 1-chome**
**Konohana-ku, Osakashi-shi, Osaka (JP)**

(74) Representative: **Patentanwälte Grünecker, Kinkeldey, Stockmair & Partner**
**Maximilianstrasse 58**
**D-80538 München (DE)**

## (54) Flame retardant resin composition.

(57) A flame-retardant resin composition comprising: (a) 100 parts by weight of a thermoplastic resin, (b) not less than 10 parts by weight and less than 80 parts by weight of a 1,2-bis(bromophenyl)ethane, (c) not less than 5 parts by weight and less than 40 parts by weight of antimony trioxide, and (d) not less than 0.5 part by weight of an antioxidant, the composition having been crosslinked to have a gel fraction of 50% or more.

EP 0 627 463 A2

## FIELD OF THE INVENTION

This invention relates to a resin composition excellent in flame retardance and heat resistance and to an insulating electric wire, a tube, and a heat-shrinkable tube using the resin composition.

## BACKGROUND OF THE INVENTION

Polyolefin resins have been used in an electric wire coating and a tube because of their excellent moldability, chemical resistance, flexibility and electrical characteristics. To make the polyolefin resins non-combustible, flame-retardants or flame-retardant assistants are added to the polyolefin resins which are essentially combustible.

Electric wires and tubes are required to have not only flame retardance but heat resistance (heat stability). Recently, the size of electric appliances has become small and the density of the electric components has increased. For this reason, the wires are offten placed near a heat source so that the demand for the heat resistance wire has been increasing. Halogenated compounds have been considered as an excellent flame-retardants. However, most of them, tetrabromobisphenol A, chlorinated paraffin, chlorinated polyethylene, etc., do not have good heat resistance.

Only decabromodiphenyl ether has been known as a flame-retardant satisfying both flame retardance and heat stability. In order to further enhance heat resistance by using decabromodiphenyl ether as a flame-retardant, it has been proposed to incorporate a triazole compound into a polyolefin resin as disclosed in JP-B-59-14204. (The term "JP-B" used herein means an examined Japanese patent publication.)

However, the heat resistance of the flame-retardant polyolefin resin composition using decabromodiphenyl ether as a flame-retardant fails to meet the latest demands for high flame retardance and high heat resistance.

## SUMMARY OF THE INVENTION

An object of the present invention is to provide a flame-retardant resin composition having both excellent flame retardance and excellent heat resistance to meet the above-described recent demands.

Another object of the present invention is to provide an electric wire having an insulating layer comprising the flame-retardant resin composition.

Further object of the present invention is to provide a tube and a heat-shrinkable tube each comprising the flame-retardant resin composition.

Other objects and effects of the present invention will be apparent from the following description.

As a result of extensive investigations on the above-mentioned problem, the present inventors have found that a crosslinked thermoplastic resin composition containing a specific bromine-containing compound, i.e., a 1,2-bis(bromophenyl)ethane, exhibits both excellent flame retardance and excellent heat stability and thus reached the present invention.

The present invention relates to a flame-retardant resin composition comprising:

(a) 100 parts by weight of a thermoplastic resin,

(b) not less than 10 parts by weight and less than 80 parts by weight of a 1,2-bis(bromophenyl)ethane,

(c) not less than 5 parts by weight and less than 40 parts by weight of antimony trioxide, and

(d) not less than 0.5 part by weight of an antioxidant,

the composition having been crosslinked to have a gel fraction of 50% or more.

The present invention also relates to an electric wire comprising a conductor having thereon an insulating layer, the insulating layer comprising the above-mentioned flame-retardant resin composition.

The present invention further relates to a tube and a heat-shrinkable tube each comprising the above-mentioned flame-retardant resin composition.

## DETAILED DESCRIPTION OF THE INVENTION

Examples of the thermoplastic resin (a) which can be used in the present invention include ethylene-based polymers, such as polyethylene, an ethylene-α-olefin copolymer, an ethylene-vinyl acetate copolymer, and an ethylene-alkyl acrylate copolymer (e.g., an ethylene-ethyl acrylate copolymer and an ethylene-methyl acrylate copolymer); polypropylene; thermoplastic elastomers, such as a polyester elastomer, a polyurethane elastomer, a polyolefin elastomer, and a polyamide elastomer; polyamide; polyethylene terephthalate; and polybutylene terephthalate. Among these, polyethylene, an ethylene-α-olefin

copolymer, an ethylene-vinyl acetate copolymer, and an ethylene-alkyl acrylate copolymer are preferred. These resins may be used either individually or in combination of two or more thereof.

The 1,2-bis(bromophenyl)ethane (b) which can be used in the present invention is represented by formula (1):

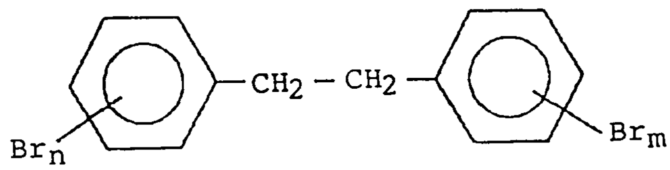

(1)

wherein n and m each represent an integer of from 0 to 5, provided that $1 \leqq (n + m) \leqq 10$.

As the number (n + m) increases, the flame retardance is enhanced. A 1,2-bis(pentabromophenyl)-ethane wherein (n + m) is 10 (i.e., 1,2-bis(pentabromophenyl)ethane) is the most preferred.

In the present invention, not less than 10 parts by weight and less than 80 parts by weight, preferably not less than 30 parts by weight and less than 70 parts by weight, of a 1,2-bis(bromophenyl)ethane (b); not less than 5 parts by weight and less than 40 parts by weight, preferably not less than 7 parts by weight and less than 30 parts by weight, of antimony trioxide (c); and not less than 0.5 part by weight, preferably from 0.5 to 20 parts by weight, more preferably from 1.0 to 10 parts by weight, of an antioxidant (d) are added to 100 parts by weight of a thermoplastic resin (a), and the resulting composition is crosslinked to have a gel fraction of 50% or more.

If the amount of the 1,2-bis(bromophenyl)ethane (b) or the amount of antimony trioxide (c) is less than the respective range, the effect of improving flame retardance is insufficient. If their amounts are greater than the respective upper limit, the resulting composition has seriously reduced heat resistance and mechanical characteristics.

Examples of the antioxidant (d) which can be used in the present invention includes amine antioxidants, such as 4,4'-dioctyldiphenylamine, N,N'-diphenyl-p-phenylenediamine, and 2,2,4-trimethyl-1,2-dihydroquinoline; phenol antioxidants, such as tetrakis[methylene-3-(3',5'-di-t-butyl-4'-hydroxyphenyl)-propionate]methane, triethylene glycol bis[3-(3-t-butyl-5-methyl-4-hydroxyphenyl)propionate], and 6-(4-hydroxy-3,5-di-t-butylanilino)-2,4-bisoctyl-thio-1,3,5-triazine; and sulfur antioxidants, such as 1,1'-thiobis(2-naphthol), 2-mercaptobenzimidazole, 2-mercaptomethylbenzimidazole, a zinc salt of 2-mercaptobenzimidazole, 1,3-bis(dimethylaminopropyl)-2-thiourea, a $\beta$-alkyl thioester propionate, and pentaerythritol tetrakis($\beta$-lauryl-thiopropionate). Among the above antioxidants, tetrakis[methylene-3-(3',5'-di-t-butyl-4'-hydroxyphenyl)propionate]methane, pentaerythritol tetrakis($\beta$-lauryl-thiopropionate), and 2-mercaptobenzimidazole are preferable.

In order to further enhance the antioxidant effect, it is particularly preferred to use an antioxidant comprising a combination of an amine antioxidant and a sulfur antioxidant or a combination of a phenol antioxidant and a sulfur antioxidant. If the amount of the antioxidant (d) is less than 0.5 part, sufficient heat resistance is not obtained. If its amount is greater than 20 parts, the resulting composition may sometimes have deteriorated appearance with blooming of the antioxidant, or reduced flame retardance and mechanical strength.

The resin composition of the present invention may further contain, in addition to the above-mentioned components, a flame-retardant assistant, a crosslinking agent, a crosslinking accelerator, a metal inactivator, a filler, a lubricant, and the like.

Especially it is very effective to use an antioxidant comprising a combination of tetrakis[methylene-3-(3',5'-dit-t-butyl-4'-hydroxyphenyl)propionate]methane and pentaerythritol tetrakis($\beta$-lauryl-thiopropionate), and furthermore, excellent heat resistance is obtained by addition of a metal inactivator such as an acid-amine derivative (e.g., "Stabinol CS-42" produced by Sumitomo Chemical Co., Ltd.) to it.

Examples of the flame-retardant assistants include zinc borate, aluminum hydroxide, magnesium hydroxide, magnesium carbonate, magnesium oxide, molybdenum oxide, tin oxide, and zinc oxide. The flame-retardant assistant is generally added in an amount of from 5 to 30 parts by weight per 100 parts by weight of the thermoplastic resin (a) to further improve flame retardance. Addition of zinc borate brings about especially improved flame retardance.

The method for crosslinking the resin composition of the present invention is not particularly limited, and any conventional means for crosslinking such as chemical crosslinking by heating and crosslinking by electron beam irradiation.

In case of the chemical crosslinking, a crosslinking agent, such as dicumyl peroxide, tert-butyl cumyl peroxide, tert-butyl peroxy isopropyl carbonate, and tert-butyl peroxy allyl carbonate is generally added to the resin composition. Generally, from 0.2 to 5 parts by weight of crosslinking agent are added to 100 parts by weight of the thermoplastic resin.

In case of the electron beam crosslinking, the electron radiation dose is generally from 5 to 50 Mrad. At lower doses, crosslinking tends to be insufficient, and at higher doses, mechanical characteristics of the resulting composition are seriously reduced.

Upon crosslinking, it is preferred to previously add a polyfunctional monomer, such as trimethylolpropane trimellitate or triallyl (iso)cyanurate, as a crosslinking accelerator. Generally, from 0.2 to 10 parts by weight of crosslinking accelerator are added to 100 parts by weight of the thermoplastic resin.

In order to impart soldering resistance (resistance to melting on contact with a high temperature molten solder) to the insulating material, it is necessary to perform crosslinking, either chemical crosslinking or electron beam crosslinking, so as to have a gel fraction of at least 50%, and preferably 60% or more. The term "gel fraction" used herein is measured by the following method: The resin composition is heated in xylene solvent at 120 °C for 24 hours to extract the soluble content, followed by drying the remains in a drier at 100 °C for 6 hours and the gel fraction is determined according to the following formula:

$$\text{Gel fraction (\%)} = \frac{\text{Weight after extraction}}{\text{Weight before extraction}} \times 100$$

Examples of the metal inactivators include 1,2,3-benzotriazole, potassium tolyltriazole, 3-(N-salicyloyl)-amino-1,2,4-triazole, N,N'-bis[3-(3,5-di-t-butyl-4-hydroxyphenyl)propionyl]hydrazine, a triazine derivative complex compound ("Mark ZS-27" produced by Adeka Argus Chemical Co., Ltd.), decamethylenedicarboxylic acid disalicyloylhydrazide, and an acid-amine derivative ("Stabinol CS-42" produced by Sumitomo chemical Co., Ltd.). The metal inactivator is generally used in an amount up to 10 parts by weight per 100 parts by weight of the thermoplastic resin (a).

Where the resin composition as an insulating material is in contact with a metal, such as copper, deterioration of the insulating material is accelerated by the catalytic action of the metal. Addition of the above-mentioned metal inactivator is effective to inhibit such metal-induced deterioration to provide an insulating material having improved heat resistance.

Examples of the fillers include talc, clay, calcium carbonate, anhydrous silicic acid, calcium silicate, and carbon black.

The method for preparing the thermoplastic resin composition according to the present invention is not particularly limited. The resin composition can be prepared by compounding the above-mentioned components with a thermoplastic resin in a prescribed proportion by, for example, kneading, molding the mixture into a molding compound, such as pellets, and molding the compound into various articles, such as tubes and heat-shrinkable tubes, by various molding techniques, such as extrusion coating, extrusion molding, injection molding, and press molding. An inner diameter and a wall thickness of the tubes are not particularly limited. Crosslinking is carried out after molding by heating the molded article prepared from the composition having incorporated thereinto a crosslinking agent, or by irradiating the molded article with electron beams. In general, the tube having a wall thickness of not more than 10 mm is crosslinked by electron beam irradiation and the tube having a wall thickness of more than 10 mm is crosslinked by chemical crosslinking.

The heat shrinkable tube of the present invention can be produced from the thermoplastic resin composition of the present invention according to any conventional processes. For example, a tube prepared from the resin composition having memorized its shape by crosslinkage is heated to a temperature above its melting point and dilated the diameter to from 2 times to 5 times by any means, such as feed of pressurized air, followed by rapid cooling. The resulting heat shrinkable tube can be restored to the memorized shape by heating to a temperature above the melting point.

The electric wire of the present invention can be produced from the thermoplastic resin composition and a conductor according to any conventional processes. For example a single-core or multi-core wire composed of a conductor, such as copper, is covered with the thermoplastic resin composition of the present invention before crosslinking by any molding means, such as extrusion coating, and the coating is subjected to crosslinking such as electron radiation crosslinking to provide an insulated electric wire. As a conductor, annealed copper, tin-plated annealed copper, nickel-plated annealed copper and the like can be

used. The thickness of an insulating layer is not particularly limited. In general the insulating layer having a thickness of from 0.15 mm to about 10 mm can be crosslinked by electron beam crosslinking and the insulating layer having a thickness of more than 10 mm is crosslinked by chemical crosslinking. The diameter of the conductor is not particularly limited. In general the conductor having a diameter of from 0.1 mm to 10 mm is used for a wire subjected to chemical crosslinking, and the conductor having a diameter of more than 10 mm is used for a wire subjected to electron beam crosslinking. A combination of chemical crosslinking and electron beam crosslinking may also be employed.

The present invention will be further described in more detail below with reference to the examples and comparative examples, but the present invention is not construed as being limited to the examples. The parts, percents and the like referred in the examples and comparative examples are by weight unless otherwise indicated.

EXAMPLES 1 TO 5 AND COMPARATIVE EXAMPLES 1 TO 4

The compositions shown in Table 1 each was extrusion coated on annealed copper wire having a diameter of 0.8 mm as a conductor to a thickness of 0.4 mm, and the coating was irradiated with 20 Mrad of electron beams to prepare electric wire having an insulating layer. The initial tensile strength of the insulating layer was measured, and a heat aging test and a vertical flame test for evaluation of flame retardance (UL standard VW-1) were conducted as follows:

The heat aging test was carried out by allowing the insulated wire to stand in a Geer oven at 180°C for 10 days and determining the retention of tensile strength and elongation according to the following formula:

$$\text{Retention (\%)} = \frac{\text{Measured value after aging}}{\text{Measured value before aging}} \times 100$$

The results obtained are shown in Table 2.

As is shown by the results of Examples 1 to 4, the retention of each of tensile strength and elongation was 50% or more even after heat aging under such conditions of 180°C for 10 days that are relatively severe for polyolefin resins. The wire of these Examples all passed the vertical flame test.

In the case where the resin composition is chemically crosslinked in the presence of a peroxide as in Example 5, the composition similarly exhibits satisfactory flame retardance and high heat resistance.

On the other hand, the compositions using decabromodiphenyl ether or ethylenebistetrabromophthalimide as in Comparative Examples 1 or 2, respectively, passed the vertical flame test but had a retention of elongation of less than 50% after aging at 180°C, proving inferior in heat resistance to those of Examples.

If the amount of decabromodiphenyl ether to be added is reduced as in Comparative Example 3, the retention of elongation after heat aging increases to 50% or more. In this case, however, the coated wire does not pass the vertical flame test.

Where the resin composition is not crosslinked as in Comparative Example 4, the insulating coating melts off the core during heat aging due to insufficient heat resistance.

TABLE 1

| Ingredient (part by weight) | Example 1 | Example 2 | Example 3 | Example 4 | Example 5* | Comparative Example 1 | Comparative Example 2 | Comparative Example 3 | Comparative Example 4 |
|---|---|---|---|---|---|---|---|---|---|
| Ethylene-vinyl acetate copolymer[1)] | 100 | 100 | - | 100 | 100 | 100 | 100 | 100 | 100 |
| Ethylene-ethyl acrylate copolymer[2)] | - | - | 50 | - | - | - | - | - | - |
| Polyethylene[3)] | - | - | 50 | - | - | - | - | - | - |
| 1,2-Bis(pentabromophenyl)ethane | 40 | 50 | 40 | 40 | 40 | - | - | - | - |
| Decabromodiphenyl ether | - | - | - | - | - | 40 | - | 15 | - |
| Ethylenebistetrabromophthalimide | - | - | - | - | - | - | 40 | - | - |
| Antimony trioxide | 10 | 10 | 10 | 10 | 10 | 10 | 10 | 10 | 10 |
| Zinc borate | 10 | 10 | 10 | 10 | 10 | 10 | 10 | 10 | 10 |
| Antioxidant 1[4)] | 1 | 1 | 1 | 1 | 1 | 1 | 1 | 1 | 1 |
| Antioxidant 2[5)] | 0.5 | 0.5 | 0.5 | 0.5 | 0.5 | 0.5 | 0.5 | 0.5 | 0.5 |
| Acid-amine derivative[6)] | - | - | - | 0.5 | - | - | - | - | - |
| Dicumyl peroxide | - | - | - | - | 1 | - | - | - | - |
| Electron radiation dose (Mrad) | 20 | 20 | 20 | 20 | - | 20 | 20 | 20 | - |

TABLE 2

| | Example | | | | | Comparative Example | | | |
|---|---|---|---|---|---|---|---|---|---|
| | 1 | 2 | 3 | 4 | 5* | 1 | 2 | 3 | 4 |
| Flame retardance (VW-1) | passed | passed | passed | passed | passed | passed | passed | rejected | passed |
| Initial tensile strength ($kg/mm^2$) | 1.40 | 1.35 | 1.30 | 1.42 | 1.50 | 1.35 | 1.10 | 1.45 | 0.70 |
| Initial elongation (%) | 390 | 350 | 370 | 380 | 350 | 400 | 350 | 420 | 600 |
| Gel fraction (%) | 72 | 70 | 68 | 70 | 75 | 71 | 81 | 73 | 0 |
| Tensile strength retention[7)] (%) | 95 | 92 | 98 | 98 | 97 | 70 | 60 | 96 | ** |
| Elongation retention[7)] (%) | 62 | 60 | 71 | 65 | 75 | 24 | 15 | 65 | ** |

Notes for Tables 1 and 2:

1) Ethylene-vinyl acetate copolymer; vinyl acetate content: 15%; MI: 06

2) Ethylene-ethyl acrylate copolymer; ethyl acrylate content: 15%; MI; 0.5

3) Polyethylene; Density: 0.92 g/cm$^3$; MI: 1.5

4) Antioxidant 1; Tetrakis[methylene-3-(3',5'-di-t-butyl-4'-hydroxyphenyl)propionate]methane

5) Antioxidant 2; Pentaerythritol tetrakis(β-lauryl-thiopropionate)

6) Acid-amine derivative; Stabinol CS-42, produced by Sumitomo Chemical Co., Ltd.

7) After aging at 180°C for 10 days

* Crosslinked by heating at 160°C for 30 minutes

** Unmeasurable due to melting during heat aging

EXAMPLE 6

A compound having the same composition as that of Example 1 was kneaded in a mixing roll and pelletized by means of a pelletizer. The pellets were extruded in an extruder into a tube having an inner diameter of 5 mm and a wall thickness of 0.3 mm.

The resulting tube was irradiated with electron beams of 20 Mrad in an electron accelerator. The tube was then passed in an oven heated to 150 °C while applying pressure in the radial direction to dilate the tube to an inner diameter of 10 mm, followed by cooling, to produce a heat shrinkable tube.

The heat shrinkable tube passed a vertical flame test. When the tube was subjected to heat aging in a Geer oven at 180 °C for 10 days, the tensile strength retention was 98%, and the elongation retention was 68%, proving satisfactory in heat resistance.

As described above, the flame-retardant resin composition according to the present invention has excellent heat resistance as well as excellent flame retardance and meets the latest demands for high flame retardance and high heat resistance.

While the invention has been described in detail and with reference to specific examples thereof, it will be apparent to one skilled in the art that various changes and modifications can be made therein without departing from the spirit and scope thereof.

## Claims

**1.** A flame-retardant resin composition comprising:

(a) 100 parts by weight of a thermoplastic resin,

(b) not less than 10 parts by weight and less than 80 parts by weight of a 1,2-bis(bromophenyl)-ethane,

(c) not less than 5 parts by weight and less than 40 parts by weight of antimony trioxide, and

(d) not less than 0.5 part by weight of an antioxidant,

said composition having been crosslinked to have a gel fraction of 50% or more.

2. A flame-retardant resin composition as claimed in claim 1, wherein said thermoplastic resin (a) is selected from the group consisting of polyethylene, an ethylene-α-olefin copolymer, an ethylene-vinyl acetate copolymer, and an ethylene-alkyl acrylate copolymer.

3. A flame-retardant resin composition as claimed in claim 1, wherein said 1,2-bis(bromophenyl)ethane (b) is 1,2-bis(pentabromophenyl)ethane.

4. A flame-retardant resin composition as claimed in claim 1, wherein said antioxidant (d) comprises a combination of an amine antioxidant and a sulfur antioxidant or a combination of a phenol antioxidant and a sulfur antioxidant.

5. A flame-retardant resin composition as claimed in claim 1, wherein said resin composition comprises:
(a) 100 parts by weight of a thermoplastic resin,
(b) not less than 30 parts by weight and less than 70 parts by weight of a 1,2-bis(bromophenyl)-ethane,
(c) not less than 7 parts by weight and less than 30 parts by weight of antimony trioxide, and
(d) not less than 0.5 part by weight of an antioxidant.

6. A flame-retardant resin composition as claimed in claim 1, wherein said composition has been crosslinked to have a gel fraction of 60% or more.

7. An electric wire comprising a conductor having thereon an insulating layer, said insulating layer comprising a flame-retardant resin composition comprising:
(a) 100 parts by weight of a thermoplastic resin,
(b) not less than 10 parts by weight and less than 80 parts by weight of a 1,2-bis(bromophenyl)-ethane,
(c) not less than 5 parts by weight and less than 40 parts by weight of antimony trioxide, and
(d) not less than 0.5 part by weight of an antioxidant,
said composition having been crosslinked to have a gel fraction of 50% or more.

8. A tube comprising a flame-retardant resin composition comprising:
(a) 100 parts by weight of a thermoplastic resin,
(b) not less than 10 parts by weight and less than 80 parts by weight of a 1,2-bis(bromophenyl)-ethane,
(c) not less than 5 parts by weight and less than 40 parts by weight of antimony trioxide, and
(d) not less than 0.5 part by weight of an antioxidant,
said composition having been crosslinked to have a gel fraction of 50% or more.

9. A heat-shrinkable tube comprising a flame-retardant resin composition comprising:
(a) 100 parts by weight of a thermoplastic resin,
(b) not less than 10 parts by weight and less than 80 parts by weight of a 1,2-bis(bromophenyl)-ethane,
(c) not less than 5 parts by weight and less than 40 parts by weight of antimony trioxide, and
(d) not less than 0.5 part by weight of an antioxidant,
said composition having been crosslinked to have a gel fraction of 50% or more.